# EUROPÄISCHE PATENTSCHRIFT

(11) **EP 2 748 013 B1**
(45) Veröffentlichungstag und Bekanntmachung des Hinweises auf die Patenterteilung: **23.11.2016**
(21) Anmeldenummer: 12746352.9
(22) Anmeldetag: 14.08.2012
(51) Int. Cl.: B60B 33/02, B60B 33/00

(54) **MONTAGEPLATTE UND ROLLE, GEGEBENENFALLS MIT EINER MONTAGEPLATTE**
MOUNTING PLATE AND CASTOR, IF APPROPRIATE WITH A MOUNTING PLATE
PLAQUE DE MONTAGE ET ENSEMBLE DE ROULEMENT POUVANT ÊTRE MUNI D'UNE PLAQUE DE MONTAGE

(30) Priorität: 25.08.2011 DE 102011052981
(43) Veröffentlichungstag der Anmeldung: 02.07.2014
(73) Patentinhaber: Tente GmbH & Co. KG, 42929 Wermelskirchen (DE)
(72) Erfinder: BLOCK, Wolfgang, 42929 Wermelskirchen (DE); PLAUTZ, Karl-Heinz, 58097 Hagen (DE)
(74) Vertreter: Müller, Enno
(86) Internationale Anmeldenummer: PCT/EP2012/065888
(87) Internationale Veröffentlichungsnummer: WO 2013/026744

(56) Entgegenhaltungen:
- DE-A1- 2 136 353
- DE-A1- 10 259 448
- DE-U1- 9 417 054

## Beschreibung

Die Erfindung betrifft zunächst eine Montageplatte nach den Merkmalen des Oberbegriffes des Anspruches 1.

Weiter betrifft die Erfindung eine Rolle mit einer Gabel und/ oder einem Drehlager nach den Merkmalen des Oberbegriffes des Anspruches 2.

Rollen der genannten Art sind bereits in verschiedener Hinsicht bekannt geworden. Zunächst ist auf die DE 20 2006 014 765 U1 zu verweisen. Das bei dieser Rolle vorgesehene Übertragungsteil ist innerhalb der Gabel und an dem Drehlager gehaltert und mittels einer als Druckfeder ausgebildeten (einzigen) Feder in die Verriegelungs- bzw. Blockierungsstellung vorgespannt.

Die bekannte Rolle weist auch eine Montageplatte auf, die jedoch als integraler Bestandteil des Drehlagers ausgebildet ist.

Aus der DE 22 39 339 A1 ist eine Rolle bekannt, deren Übertragungsteil über ein Schiebeteil, das oberhalb eines oberen Endes des Übertragungsteils quer zur Bewegung des Übertragungsteils verschiebbar angeordnet ist, zu betätigen ist. Die Rolle ist in üblicher Weise mit einem Aufnahmezapfen ausgebildet, in welchem das an der Rolle befestigte Übertragungsteil aufgenommen ist. Eine vergleichbare Ausgestaltung einer Rolle zeigt auch die US 5 579 871 A.

Aus der DE-A1-102 59 448 ist eine gattungsgemäße Montageplatte und Rolle bekannt, bei welcher formschlussverbunden mit einem an dem Drehlager pressgehalterten Teil ein Flanschgehäuse ausgebildet ist. Umfasst von dem Flanschgehäuse ist ein Schiebeteil angeordnet, unterhalb welchem ein das Drehlager übersetzendes Übertragungsteil angeordnet ist. Das Übertragungsteil ist nicht mit dem Flanschgehäuse verbunden. Die DE 9417 054 U1 zeigt eine Rolle, bei welcher über einen wippenartigen Hebel in einem Distanzrahmen ein das Drehlager durchsetzendes Übertragungsteil einwirkt. Das Übertragungsteil ist mit dem Distanzrahmen nicht verbunden. Die DE-A1-21 36 353 zeigt ebenfalls eine Rolle, bei welcher ein Übertragungsteil, das durch ein außerhalb der Rolle angeordnetes Schiebeteil zu betätigen ist. Das Übertragungsteil verbleibt bei einer Demontage im Rollenunterbau.

Ausgehend von dem genannten Stand der Technik beschäftigt sich die Erfindung mit der Aufgabe, eine im Hinblick auf eine feststellbare Rolle vorteilhafte Gestaltung einer Montageplatte anzugeben und/ oder eine vorteilhafte Rolle mit Feststelleinrichtung und Montageplatte anzugeben.

Die Aufgabe ist nach einem ersten Erfindungsgedanken bei einer Montageplatte gelöst, bei der unterseitig und an dieser gehaltert ein Übertragungsteil für eine Feststellung der Rolle angeordnet ist, wobei das Übertragungsteil durch ein ebenfalls an der Montageplatte gehaltertes Schiebeteil zu beaufschlagen ist, weiter ein das Übertragungsteil halterndes und ebenfalls an der Montageplatte befestigtes Halterungsteil vorgesehen ist, welches das zwischen der Montageplatte und dem Übertragungsteil angeordnete Schiebeteil führt, wobei weiter das Halterungsteil domartig und das Übertragungsteil als Stößelteil mit einer oberen Vergrößerung ausgebildet ist, mit der es in dem unterseitig bezüglich des Aufnahmeraumes verjüngten Halterungsteil gefangen ist und das Übertragungsteil ausgehend von und gehaltert an der Montageplatte in eine Durchgriffsöffnung an der Gabel oder dem Drehlager eingreifen kann.

Die Aufgabe ist weiter bei einer Rolle gelöst, bei welcher darauf abgestellt ist, dass ein unterseitig der Montageplatte und mit dieser gehaltert ausgebildetes Übertragungsteil zur Total- und/ oder Richtungsfeststellung durch Einwirkung auf das Rad und/ oder das Drehlager vorgesehen ist, wobei das Übertragungsteil durch ein ebenfalls an der Montageplatte gehaltertes Schiebeteil zu beaufschlagen ist, weiter ein das Übertragungsteil halterndes und ebenfalls an der Montageplatte befestigtes Halterungsteil vorgesehen ist, welches das zwischen der Montageplatte und dem Übertragungsteil angeordnete Schiebeteil führt, wobei weiter das Halterungsteil domartig und das Übertragungsteil als Stößelteil mit einer oberen Vergrößerung ausgebildet ist, mit der es in dem unterseitig bzgl. des Aufnahmeraumes verjüngten Halterungsteil gefangen ist und das Übertragungsteil ausgehend von und gehaltert an der Montageplatte in eine Durchgriffsöffnung an der Gabel oder dem Drehlager eingreifen kann.

Das Schiebeteil ermöglicht es, die Montageplatte ohne über die hierdurch gebildete oberseitige Montagefläche überstehendes Teil auszubilden. Das Schiebeteil ist bevorzugt parallel zu einer Ebene der Oberseite der Montageplatte beweglich angeordnet. Weiter bevorzugt an einer Unterseite der Montageplatte.

Es ist bevorzugt, dass das Übertragungsteil für eine Beaufschlagung im Hinblick auf eine Richtungs- und/ oder Totalfeststellung der Laufrolle vorgesehen ist. Das Übertragungsteil kann ein oder mehrere Eingriffsteile, die bevorzugt dann an dem Rollenunterbau angebracht sind, im Hinblick hierauf beaufschlagen.

Das Übertragungsteil kann einer zentralen Öffnung des Drehlagers zuordbar sein bzw. im zusammengesetzten Zustand oder insofern integraler Ausbildung der Rolle der diesbezüglichen Öffnung zugeordnet sein. Das üblicherweise und bevorzugt aus zur Aufnahme von Kugeln zur Ausbildung eines Kugellagers geformten Blechteilen ausgebildete Drehlager, von denen ein oberes Teil auch zugleich als Lagerteller, der dann weiter bevorzugt zur Verbindung mit der Montageplatte dient, ausgebildet sein kann, ist bevorzugt mit einer inneren zentralen Öffnung gebildet, in welche das Übertragungsteil eingreifen oder welches sie durchsetzen kann.

Das Schiebeteil ist bevorzugt, in vertikaler Richtung gesehen, zwischen der Montageplatte und dem Übertragungsteil angeordnet. Es kann zugleich von einem das Übertragungsteil halternden und an der Montageplatte ebenfalls befestigten Halterungsteil mit oder alleine hierdurch geführt sein.

Zur Betätigung des Schiebeteils kann ein Betätigungshebel vorgesehen sein. Dieser kann bspw. durch einen Fuß eines Benutzers beaufschlagbar sein. Insbesondere ist bevorzugt, dass der Betätigungshebel ebenfalls an der Montageplatte gelagert ist. Die Montageplatte weist zugleich in dieser Gestaltung also auch das Funktionsteil zur Betätigung des Übertragungsteils auf.

Weiter ist bevorzugt, dass die Montageplatte im Hinblick auf die genannten und ggf. einzeln oder kombiniert vorgesehen Funktionsteile, federfrei ausgebildet ist. Dies führt zunächst einmal zu einer einfachen Montagemöglichkeit der Montageplatte selbst. Zudem sind die weiter bevorzugt gleichwohl vorgesehenen ein oder mehreren Federteile in dem Rollenunterbau, der mit der Montageplatte zu verbinden ist oder verbunden ist, ausgebildet, und können zugleich mit diesem bspw. ausgetauscht werden.

Im Hinblick auf die beiden Federteile, die zur Zusammenwirkung mit dem Feststellteil vorgesehen sind, ist auch bevorzugt, dass diese Federteile gegensinnig gerichtet zueinander an der Rolle, bevorzugt unmittelbar an der Gabel, befestigt sind. Die Anordnung in gegeneinander gerichteter Weise, wobei bevorzugt auch eine zumindest teilweise Überlappung vorgesehen ist, ermöglicht eine günstige Erstreckung der jeweiligen Federteile. Die überlappende bzw. ineinandergreifende Anordnung ermöglicht auch eine vorteilhafte Raumausnutzung.

Auch ist bevorzugt, dass das zweite Federteil Führungsfortsätze aufweist, zwischen denen sich ein Eingriffsabschnitt des ersten Federteils erstreckt. Der Eingriffsabschnitt, der mit dem Feststellteil zusammenwirkt, das bspw. ein eine Zahnkranzausbildung aufweisendes Metallteil sein kann, kann bei erheblicher (Dreh-)Belastung, in Abhängigkeit auch von der freikragenden Federlänge dieses ersten Federteils, in Drehrichtung ausgelenkt werden. Die Führungsfortsätze können beispielsweise diesbezüglich eine günstige Stabilisierung erbringen. Bevorzugt ist auch, dass an dem ersten Federteil anderendig zu dem Eingriffsabschnitt ein Bremsteil zur Radfeststellung ausgebildet ist. Dieses Bremsteil kann ein üblicher Bremsblock sein. Weiter bevorzugt ist dieser Bereich des ersten Federteils in Überdeckung zu der zentralen Öffnung und/oder dem Übertragungsteil angeordnet. So kann eine unmittelbare Beaufschlagung erfolgen.

Im Weiteren ist auch bevorzugt, dass das erste Federteil als Federhebel, weiter bevorzugt als Federwippe ausgebildet ist und schwenkbeweglich an der Gabel gelagert ist. Es ist bevorzugt in einem mittleren Bereich bezogen auf die Längserstreckung des ersten Federteils schwenkbeweglich gelagert. An dem einen Ende des Federhebels ist dann bevorzugt das Bremsteil angeordnet und an dem anderen Ende des ersten Federteils der Zusammenwirkungsbereich mit dem Feststellteil ausgebildet ist.

Nachstehend ist die Erfindung weiter anhand der beigefügten Zeichnung erläutert, die aber lediglich ein Ausführungsbeispiel der Erfindung darstellt. Hierbei zeigt:
- Fig. 1: eine perspektivische Ansicht einer Rolle mit aufgebrachter Montageplatte;
- Fig. 2: eine Seitenansicht der Rolle gemäß Fig. 1, mit teilweise dargestellten, im Inneren der Rolle befindlichen Funktionsteilen;
- Fig. 3: eine Unteransicht der Rolle gemäß Fig. 1 bzw. Fig. 2, bei entferntem Rad;
- Fig. 4: einen Querschnitt durch den Gegenstand gemäß Fig. 1 bzw. Fig. 3, teilweise geschnitten in der Ebene IV-IV in Fig. 3, mit Rad;
- Fig. 5: eine perspektivische Unteransicht der Montageplatte alleine;
- Fig. 6: einen Querschnitt durch den Gegenstand gemäß Fig. 5, geschnitten in der Ebene VI-VI in Fig. 5;
- Fig. 7: eine Explosionsdarstellung der Rolle; und
- Fig. 8: eine Darstellung der Rolle im Bereich der Montageplatte, entsprechend Fig. 4, im Zustand der Totalfestsetzung.

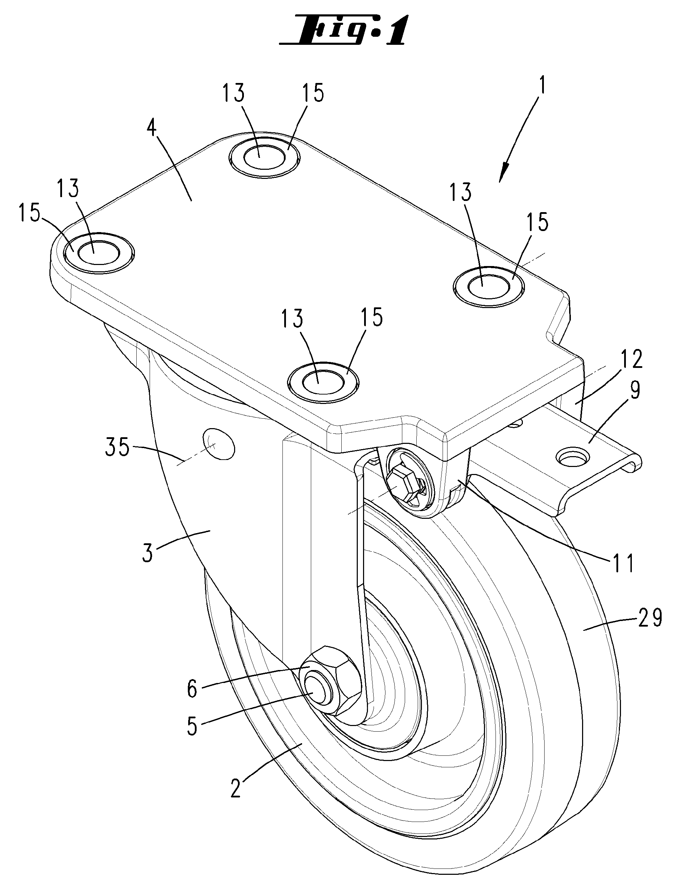

Dargestellt und beschrieben ist, mit Bezug zunächst zu Figur 1, eine Rolle 1 mit einem Rad 2, einer Gabel 3 und einer Montageplatte 4.

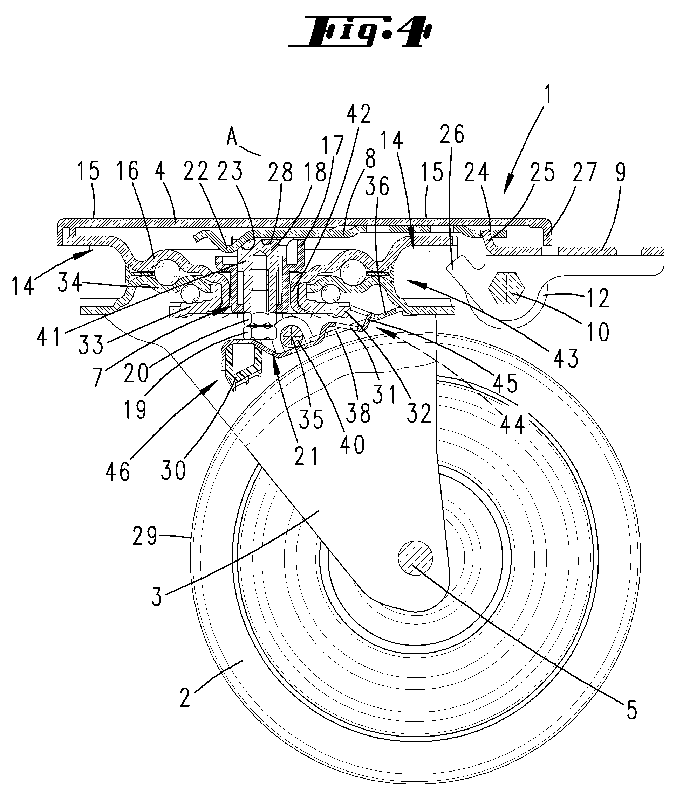

In der Gabel 3 ist das Rad 2 mittels einer Achse 5 (siehe etwa Figur 4) gelagert, die außenseitig der Gabel 3 - beim Ausführungsbeispiel - durch Muttern 6 an der insoweit mit einem Außengewinde ausgebildeten Achse 5 relativ zu der Gabel 3 gesichert ist.

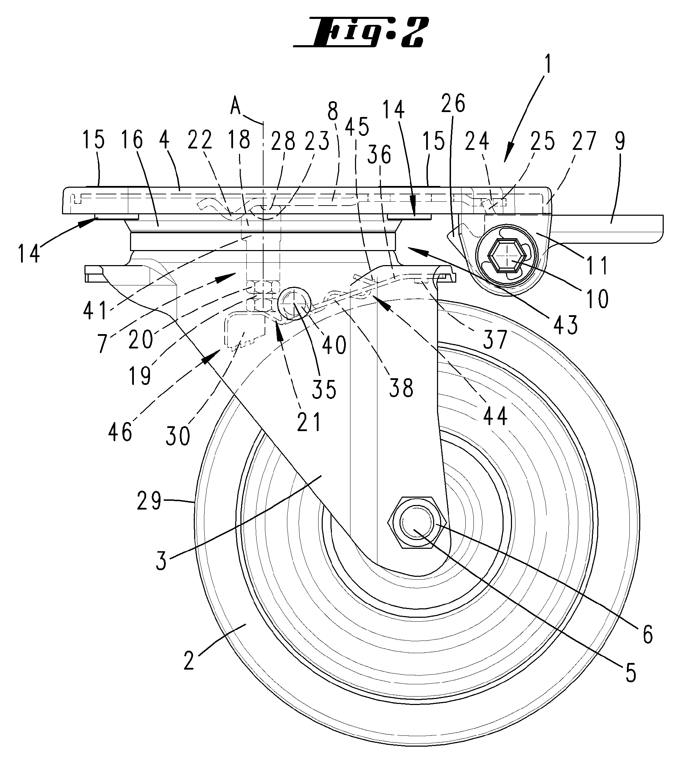

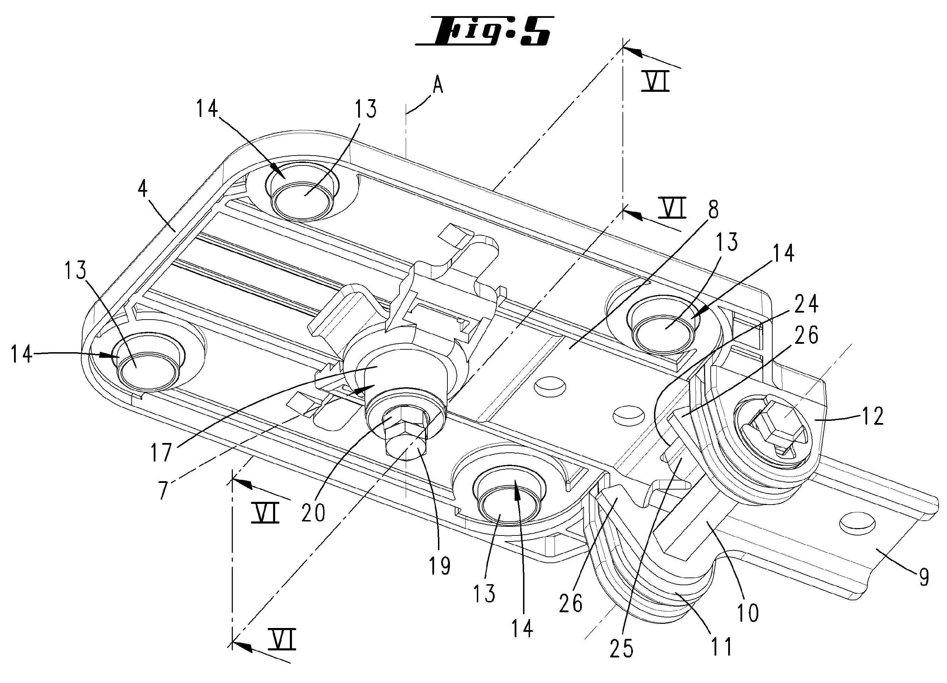

An der Montageplatte 4, siehe auch Figur 2, ist ein Übertragungsteil 7 befestigt, das durch ein Schiebeteil 8 beaufschlagbar ist. Das Schiebeteil 8 ist weiter beim Ausführungsbeispiel durch einen Betätigungshebel 9 bewegbar. Der Betätigungshebel 9 ist ebenfalls an der Montageplatte 4, im Einzelnen über eine Achse 10, gelagert. In weiterer Einzelheit durchsetzt die ersichtlich zur Drehfestsetzung mit dem Betätigungshebel 9 unrund, nämlich beim Ausführungsbeispiel mit einem Sechskantquerschnitt, gebildete Achse 10 zwei an der Montageplatte unterseitig ausgebildete Lageraufnahmen 11, 12, siehe auch Figur 5.

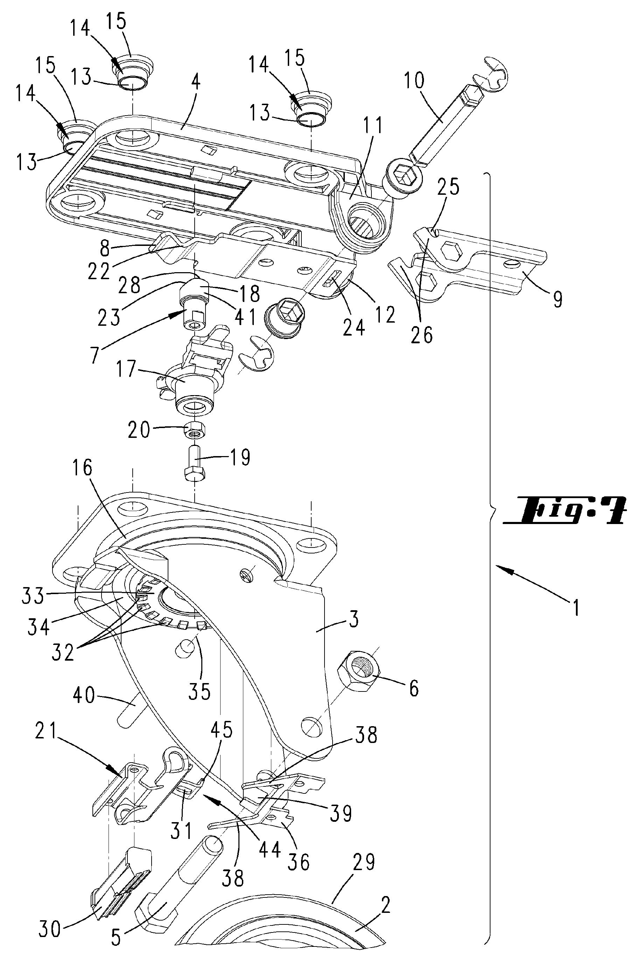

Die Montageplatte 4 ist in weiterer Einzelheit, wie auch etwa Figur 5 zu entnehmen ist, mit Durchgriffsöffnungen 13 ausgebildet, die bevorzugt Eckbereichen der beim Ausführungsbeispiel bevorzugt im Wesentlichen rechteckig ausgebildeten Montageplatte 4 zugeordnet sind. Diese Durchgriffsöffnungen 13 sind im Einzelnen bevorzugt mit einem nach unten ragenden Rohrabschnittsteil 14, bevorzugt jeweils, versehen, die, wie etwa aus Figur 7 ersichtlich, mit einem oberseitigen Übergreifflansch 15 ausgebildet sind. Die Rohrabschnittsteile 14 können von oben in die Montageplatte eingesetzt werden, wobei der Übergreifflansch 15, siehe auch etwa Figur 1, in eine entsprechende Ausnehmung, so dass sich gleichwohl eine ebenflächige Oberseite der Montageplatte 4 ergibt, eingreifen kann. Unterseitig können die Rohrabschnittsteile 14 im montierten Zustand zum Klemmverbindung mit dem Rollenunterbau, etwa durch eine gewisse Aufweitung, dienen.

Anstelle eines oder mehrerer oder aller Rohrabschnittsteile 14 können auch Verbindungsteile vorgesehen sein, die keine Durchgriffsöffnung belassen, also bspw. zu einer geschlossenen Oberseite der Montageplatte 4 beitragen.

Wie in weiterer Einzelheit etwa Figur 4 zu entnehmen ist, ist die Montageplatte 4 beim Ausführungsbeispiel im Einzelnen mit einem oberen Lagerteller 16 des Drehlagers der dargestellten Lenkrolle verbunden. Dieser weist den Rohrabsatzteilen 14 entsprechende Öffnungen auf, die hiervon durchgriffen sind und etwa durch das genannte Aufweiten dann die Klemmverbindung mit der Montageplatte ergeben.

Während die Montageplatte 4 selbst z.B. als Metallteil, bevorzugt aber als Kunststoffteil, ausgebildet ist, sind weiter bevorzugt die Rohrabschnittsteile oder gegebenenfalls ein sonstiges Verbindungsteil als metallische Teile ausgebildet.

Das Übertragungsteil 7 ist in einem an der Montageplatte unterseitig befestigten Halterungsteil 17 aufgenommen. Dieses ist ersichtlich beim Ausführungsbeispiel und bevorzugt domartig ausgebildet. Das Übertragungsteil 7 besteht als solches aus einem frei aber bevorzugt anschlagbegrenzt oder jedenfalls in gefangener Form gehaltert vertikal verschieblichen Stößelteil 18, das bevorzugt, beim Ausführungsbeispiel, in weiterer Einzelheit, unterseitig einen Schraubbolzen 19 aufnimmt, der durch eine Mutter 20, hier um einen Kontereffekt zu erreichen, gesichert ist. Der - untere Kopf des Schraubbolzens - dient zugleich zur Beaufschlagung des - beim Ausführungsbeispiel - sowohl zur Bremsfeststellung wie zur Richtungsfeststellung ausgebildeten ersten Federteils 21.

Das Übertragungsteil 7, beim Ausführungsbeispiel das Stößelteil 18, und bevorzugt, wie beim Ausführungsbeispiel, das Halterungsteil 17, durchsetzen eine zentrale Öffnung 42 des Drehlagers 43.

Das Stößelteil 18 weist eine obere Vergrößerung 41 auf, mit der es in den unterseitig bezüglich des Aufnahmeraumes verjüngten Halterungsteils 17 gefangen ist.

Das an der Unterseite der Montageplatte 4, vertikal zwischen der Montageplatte 4 und dem Stößelteil 18 angeordnete Schiebeteil 8 wirkt in weiterer Einzelheit mittels eines Nockens 22 auf das montageplattenseitige Ende des Übertragungsteils 7, bzw. beim Ausführungsbeispiel konkret des Stößelteils 18. Hierzu weist das Stößelteil 18 einseitig eine Beaufschlagungsschräge 23 auf.

Der Nocken 22 ist beim Ausführungsbeispiel und bevorzugt aus dem Schiebeteil 8 selbst bspw. durch Verformung ausgebildet. Die Wandstärke des Schiebteils 8 kann auch im Bereich des Nockens 22 praktisch unverändert sein.

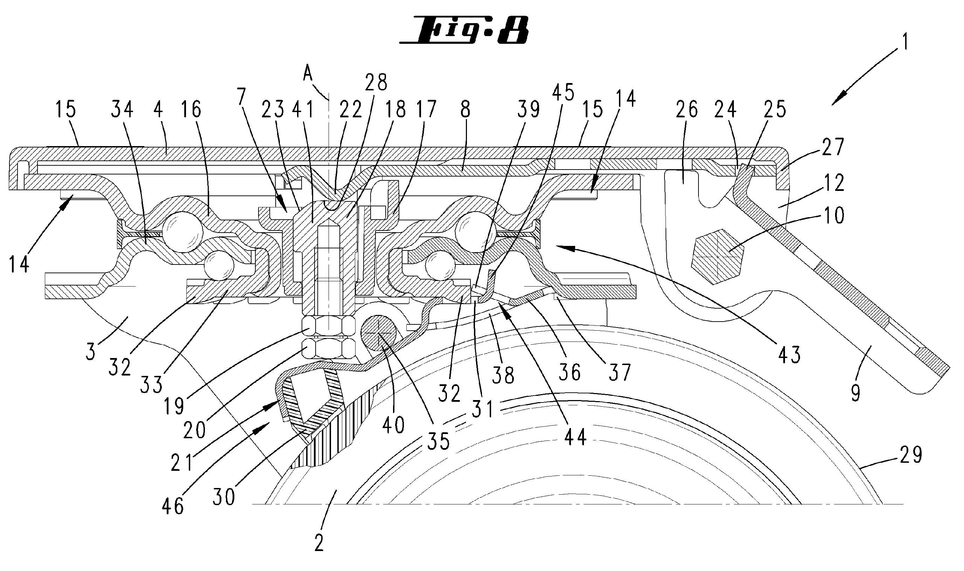

An dem Schiebeteil 8 ist weiter, bevorzugt an dem Nocken 22 gegenüberliegenden Endbereich, eine Eingriffsöffnung 24 ausgebildet, zur Zusammenwirkung des Betätigungshebels 9 mit dem Schiebeteil 8. In der Betätigungsstellung, siehe Figur 8, kommt ein an dem Betätigungshebel 9 nockenseitig zu dem an dem Betätigungshebel 9 zur Zusammenwirkung mit der Eingriffsöffnung 24 ausgebildeten Hakenabschnitt 25 vorgesehener Anschlagvorsprung 26 zur Anlage an der Montageplatte bzw. konkret beim Ausführungsbeispiel unmittelbar an dem Schiebeteil 8. Zudem ist das Schiebeteil 8 in dieser Stellung bevorzugt gegen einen heruntergezognen Rand 27 der Montageplatte 8 gefahren, wie sich auch aus Figur 8 ergibt.

Die Montageplatte 4, wie sie im Einzelnen auch in Fig. 5 dargestellt ist, ist bevorzugt und beim Ausführungsbeispiel federfrei ausgebildet. Das Stößelteil 18 kann sich bspw., wenn keine Montage an einen Rollenunterbau vorliegt, vertikal frei in dem Halterungsteil 17 bewegen. Auch kann das Schiebeteil 8 in diesem Zustand frei hin- und herbewegt werden.

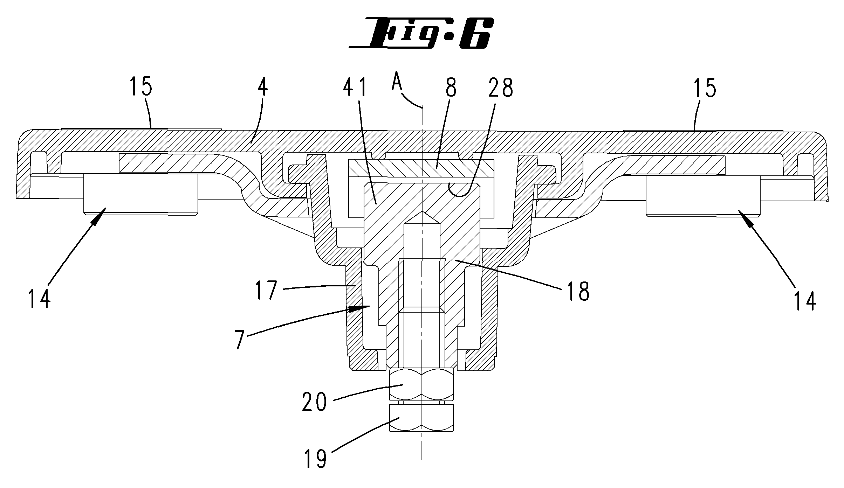

Alle in Figur 5 nicht dargestellten Teile der Rolle 1 gemäß Figur 1, bzw. die im unteren Bereich der Figur 6, beginnend mit dem Lagerteller 16 dargestellten Teile sind auch zusammengefasst als Rollenunterbau bezeichnet.

In der Eingriffsstellung gemäß Figur 8 liegt der Nocken 22 auf einer vorzugsweise ebenflächigen und zumindest annähernd parallel zu einer Unterseite der Montageplatte 4, bzw. in Erstreckungsrichtung der Montageplatte 4 ausgebildeten Beaufschlagungsfläche 28 des Stößelteils 18 auf. Aufgrund der mit der Bewegung des Schiebeteils in die Eingriffsstellung gemäß Figur 8 verbundenen Beaufschlagung des Schiebeteils 8 in Richtung auf die Montageplatte 4, dem durch das erste Federteil 21 in gewissem Umfang entgegengewirkt ist, ergibt sich eine reibschlüssige Halterung in dieser Stellung, die ohne weitere Betätigung nicht verlassen wird. Zur Aufhebung dieser Stellung ist eine aktive Betätigung des Betätigungshebels 9 in Rückstellrichtung erforderlich.

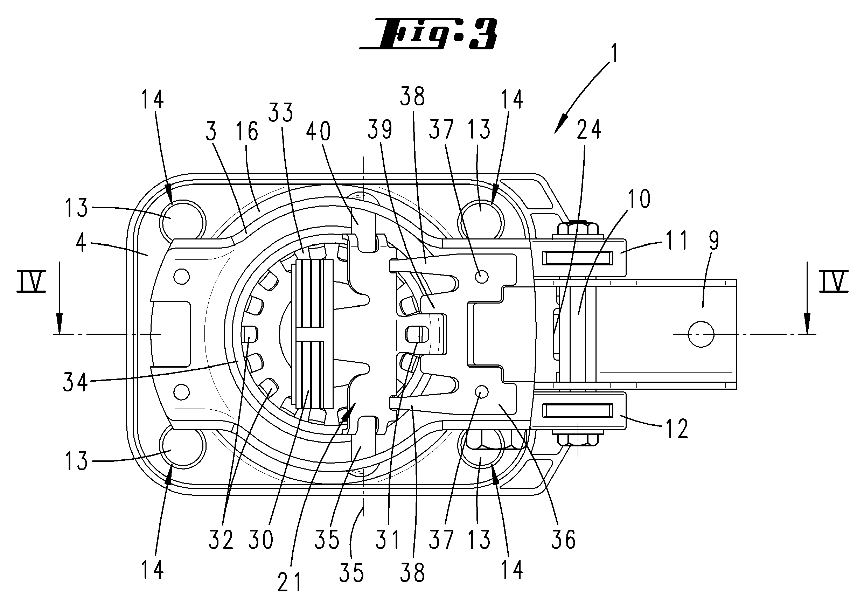

Im Einzelnen ist die Rolle 1 mit einer Richtungsfeststellung und einer Totalfeststellung ausgebildet. Hierzu ist ein Eingriffsteil in Form des ersten Federteils 21 vorgesehen. Das erste Federteil 21, das weiter ersichtlich und bevorzugt beim Ausführungsbeispiel als Hebelteil bzw. Wippenteil ausgebildet ist, weist einseitig einen zur Einwirkung auf die Radfläche 29 ausgebildeten, hier in Form eines in Richtung der Achse 5 langgestreckten Bremsblock 30 auf und anderendig eine Rastausnehmung 31. Der Bremsblock 30 ist beim Ausführungsbeispiel in einem als Bremsteil 46 anzusprechenden Abschnitt des ersten Federteils 21 aufgenommen. Mit der Rastausnehmung 31 kann das erste Federteil 21 mit einer Zahnausbildung 32 an dem Feststellteil 33 zusammenwirken, siehe auch Figur 3. Das Feststellteil 33 ist zugleich ein unterer Lagerteller des Drehlagers, bei dem weiter ein mittlerer Lagerteller 34 ausgebildet ist. Der Lagerteller 34 geht beim Ausführungsbeispiel unmittelbar in die Gabel 3 über. Das Feststellteil 33 ist fest mit dem oberen Lagerteller 16 verbunden. Es ist damit drehfest mit der Montageplatte 4, mit welcher wiederum der obere Lagerteller fest verbunden ist. Demgegenüber ist die Gabel 3 mit dem mittleren Lagerteller 34 relativ zu dem Feststellkeil 33 um eine vertikale Drehachse A drehbar.

Das erste Federteil 21 ist - beim Ausführungsbeispiel um die horizontale Achse 35 in seinen Endbereichen vertikal verschwenkbar - aber drehfest - mit der Gabel 3 verbunden. In der Totalfeststellungs-Stellung gemäß Figur 8 ist damit auch die Drehfestsetzung der Gabel 3 relativ zu der Montageplatte 4 erreicht.

Zugeordnet zu dem ersten Federteil 21 ist ein zweites Federteil 36 vorgesehen. Das zweite Federteil 36 ist ebenfalls gabelfest, beim Ausführungsbeispiel bevorzugt an dem mittleren Lagerteller 34 angebracht. Der Befestigungsort, bevorzugt bei Befestigung über Befestigungsnieten 37, siehe etwa Figur 3, ist beabstandet zu dem darauf gerichteten Endbereich des ersten Federteils 21 angeordnet, der die Rastausnehmung 31 ausbildet, des ersten Federteils 21, angeordnet. Die Funktionsabschnitte des zweiten Federteils 36, Federarme 38 und Führungsausformungen 39, sind hiervon ausgehend in Richtung auf das erste Federteil gerichtet ausgebildet.

Zwischen den Führungsausformungen 39 ist ersichtlich in überlappender Weise, bezogen auf eine vertikale Projektion, der die Rastausnehmung 31 ausbildende Eingriffsabschnitt 44 des ersten Federteils 21 angeordnet. Im Hinblick auf die zwischen Eingriffs- und Freigabestellung gegebene Vertikalbewegung des Eingriffsabschnitts 44 weist dieser an seinem freien, dem zweiten Federteil 36 zugeordneten Ende einen nach oben abgebogenen Hakenabschnitt 45 auf. Ungeachtet der Vertikalbewegung ist damit dieser Endbereich des ersten Federteils 21 jeweils zwischen den Führungsausformungen 39 aufgenommen.

Dagegen sind die Federarme 38 in Querrichtung zur Erstreckungsrichtung des ersten Federteils 21 (wobei die Erstreckungsrichtung in Verbindungsrichtung von der Rastausnehmung 31 zu dem Bremsteil 30 gesehen ist) mit Abstand hierzu angeordnet. Die Federarme 38 wirken auf das erste Federteil nahe einer Halterungsachse 40 des ersten Federteils 21. Um diese Halterungsachse 40 ist das insoweit hebelartig gestaltete erste Federteil 21 schwenkbeweglich, Die Federarme 38 wirken bevorzugt wie dargestellt mit einem Abstand zwischen 1/10 bis 1 x des Durchmesser der realen Haltexungsachse 40 zu einer diese durchsetzenden geometrischen Schwenkachse auf das erste Federteil 21 ein.

Die Halterungsachse 40 ist unmittelbar in Schenkeln der Gabel 3 gelagert.

### Bezugszeichenliste

- 1: Rolle
- 2: Rad
- 3: Gabel
- 4: Montageplatte
- 5: Achse
- 6: Mutter
- 7: Übertragungsteil
- 8: Schiebeteil
- 9: Betätigungshebel
- 10: Achse
- 11: Lageraufnahme
- 12: Lageraufnahme
- 13: Durchgriffsöffnung
- 14: Rohrabschnittsteil
- 15: Übergriff
- 16: Lagerteller
- 17: Halterungsteil
- 18: Stößelteil
- 19: Schraube
- 20: Mutter
- 21: erstes Federteil
- 22: Nocken
- 23: Beaufschlagungsschräge
- 24: Eingriffsöffnung
- 25: Hakenabschnitt
- 26: Anschlagvorsprung
- 27: Rand
- 28: Beaufschlagungsfläche
- 29: Radfläche
- 30: Bremsblock
- 31: Rastausnehmung
- 32: Zahnausformung
- 33: Feststellteil
- 34: Lagerteller, mittlerer
- 35: Achse
- 36: zweites Federteil
- 37: Befestigungsnieten
- 38: Federarm
- 39: Führungsaufnahme
- 40: Halterungsachse
- 41: Vergrößerung
- 42: Öffnung
- 43: Drehlager
- 44: Eingriffsabschnitt
- 45: Hakenabschnitt
- 46: Bremsteil

- A: Drehachse

## Patentansprüche

1. Auf einer Gabel (3) oder einem Drehlager einer Rolle (1) aufsetzbare und mit der Gabel (3) oder einem Teil des Drehlagers (43) verbindbare Montageplatte (4), wobei unterseitig an der Montageplatte (4) und an dieser gehaltert ein Übertragungsteil (7) für eine Feststellung der Rolle (1) angeordnet ist, wobei das Übertragungsteil (7) durch ein ebenfalls an der Montageplatte (4) gehaltertes Schiebeteil (8) zu beaufschlagen ist, dass weiter ein das Übertragungsteil (7) halterndes und ebenfalls an der Montageplatte (4) befestigtes Halterungsteil (17) vorgesehen ist, welches das zwischen der Montageplatte (4) und dem Übertragungsteil (7) angeordnete Schiebeteil (8) führt, wobei das Übertragungsteil (7) ausgehend von und gehaltert an der Montageplatte (4) in eine Durchgriffsöffnung an der Gabel oder dem Drehlager eingreifen kann, **dadurch gekennzeichnet, dass** weiter das Halterungsteil (17) domartig und das Übertragungsteil (7) als Stößelteil mit einer oberen Vergrößerung (41) ausgebildet ist, mit der es in dem unterseitig bezüglich des Aufnahmeraumes verjüngten Halterungsteil (17) gefangen ist.

2. Rolle (1) mit einer Gabel (3) und/oder einem Drehlager (43), sowie einem Rad (2), und einer oberseitig der Gabel (4) bzw. des Drehlagers (43) angeordneten Montageplatte (4), wobei ein unterseitig der Montageplatte (4) und mit dieser gehaltert ausgebildetes Übertragungsteil (7) zur Total- und/ oder Richtungsfeststellung durch Einwirkung auf das Rad (2) und/ oder das Drehlager (43), wobei das Übertragungsteil (7) durch ein ebenfalls an der Montageplatte (4) gehaltertes Schiebeteil (8) zu beaufschlagen ist, dass weiter ein das Übertragungsteil (7) halterndes und ebenfalls an der Montageplatte (4) befestigtes Halterungsteil (17) vorgesehen ist, welches das zwischen der Montageplatte (4) und dem Übertragungsteil (7) angeordnete Schiebeteil (8) führt, r und das Übertragungsteil (7) ausgehend von und gehaltert an der Montageplatte (4) in eine Durchgriffsöffnung an der Gabel oder dem Drehlager eingreifen kann, **dadurch gekennzeichnet, dass** weiter das Halterungsteil (17) domartig und das Übertragungsteil (7) als Stößelteil mit einer oberen Vergrößerung (41) ausgebildet ist, mit der es in dem unterseitig bezüglich des Aufnahmeraumes verjüngten Halterungsteil (17) gefangen ist.

3. Montageplatte oder Rolle nach Anspruch 1 bzw. 2, **dadurch gekennzeichnet, dass** die Montageplatte (4) mit dem Übertragungsteil (7) und dem Schiebeteil (8) eine auf die Gabel (3) aufsetzbare vorgefertigte Baueinheit ist.

4. Rolle (1) oder Montageplatte (4) nach einem der vorhergehenden Ansprüche, **dadurch gekennzeichnet, dass** das Schiebeteil (8) zwischen der Montageplatte (4) und dem Übertragungsteil (7) angeordnet ist.

5. Rolle (1) oder Montageplatte (4) nach einem der vorhergehenden Ansprüche, **dadurch gekennzeichnet, dass** die Rolle (1) ein Drehlager (43) mit einem oberen Lagerteller (16) aufweist, und dass die Montageplatte (4) auf dem Lagerteller (16) aufsetzbar und an diesem befestigbar ist.

6. Rolle (1) oder Montageplatte (4) nach einem der vorhergehenden Ansprüche, **dadurch gekennzeichnet, dass** das Übertragungsteil (7) für eine Beaufschlagung im Hinblick auf eine Richtungs- und/ oder Totalfeststellung der Laufrolle (1) vorgesehen ist.

7. Rolle (1) oder Montageplatte (4) nach einem der Ansprüche 5 oder 6, **dadurch gekennzeichnet, dass** das Übertragungsteil (7) einer zentralen Öffnung (42) des Drehlagers (43) zuordbar ist.

8. Rolle (1) oder Montageplatte (4) nach einem der vorhergehenden Ansprüche, **dadurch gekennzeichnet, dass** zur Betätigung des Schiebeteils (8) ein Betätigungshebel (9) vorgesehen ist.

9. Rolle (1) oder Montageplatte (4) nach Anspruch 8, **dadurch gekennzeichnet, dass** der Betätigungshebel (9) an der Montageplatte (4) gelagert ist.

10. Rolle (1) oder Montageplatte (4) nach einem der vorherigen Ansprüche, **dadurch gekennzeichnet, dass** die Montageplatte (4) federfrei ausgebildet ist.

## Claims

1. A mounting plate (4) which is placeable on a fork (3) or a rotary bearing of a castor (1) and which is connectable to the fork (3) or to a part of the rotary bearing (43), a transmission part (7) for locking the castor (1) being disposed on the underside on the mounting plate (4) and being held thereon, the transmission part (7) to be acted on by a sliding part (8) which likewise is held on the mounting plate (4), that furthermore a holding part (17) is provided which holds the transmission part (7) and is likewise secured to the mounting plate (4), and which guides the sliding part (8) that is disposed between the mounting plate (4) and the transmission part (7), the transmission part (7), starting from and held on the mounting plate (4), being able to engage in a passage opening at the fork or the rotary bearing, **characterized in that** the holding part (17) furthermore has a dome-like shape, and the transmission part (7) is formed as a tappet part with an upper enlargement (41) via which it is held captive in the holding part (17), which holding part is narrowed at the lower side with regard to the receiving space.

2. A castor (1) comprising a fork (3) and/or a rotary bearing (43) and also a wheel (2) and a mounting plate (4) that is disposed at the upper side of the fork (4) and/or the rotary bearing (43), a transmission part (7) for total locking and/or directional locking by acting on the wheel (2) and/or the rotary bearing (43) being provided on the underside of the mounting plate (4) and being held thereby, the transmission part (7) to be acted on by a sliding part (8) which likewise is held on the mounting plate (4), that furthermore a holding part (17) is provided which holds the transmission part (7) and is likewise secured to the mounting plate (4), and which guides the sliding part (8) that is disposed between the mounting plate (4) and the transmission part (7), and the transmission part (7), starting from and held on the mounting plate (4), being able to engage in a passage opening at the fork or the rotary bearing, **characterized in that** the holding part (17) furthermore has a dome-like shape, and the transmission part (7) is formed as a tappet part with an upper enlargement (41) via which it is held captive in the holding part (17), which holding part is narrowed at the lower side with regard to the receiving space.

3. A mounting plate or castor according to Claim 1 and/or Claim 2, **characterized in that** the mounting plate (4) together with the transmission part (7) and the sliding part (8) is a prefabricated structural unit that can be fitted onto the fork (3).

4. A castor (1) or mounting plate (4) according to any of the preceding claims, **characterized in that** the sliding part (8) is disposed between the mounting plate (4) and the transmission part (7).

5. A castor (1) or mounting plate (4) according to any of the preceding claims, **characterized in that** the castor (1) has a rotary bearing (43) with an upper bearing plate (16), and that the mounting plate (4) is placeable on the bearing plate (16) and is securable thereto.

6. A castor (1) or mounting plate (4) according to any of the preceding claims, **characterized in that** the transmission part (7) is provided for acting with regard to directional locking and/or total locking of the cast 0r (1).

7. A castor (1) or mounting plate (4) according to Claim 5 or 6, **characterized in that** the transmission part (7) can be associated with a central opening (42) of the rotary bearing (43).

8. A castor (1) or mounting plate (4) according to any of the preceding claims, **characterized in that** an actuating lever (9) is provided for actuating the sliding part (8).

9. A castor (1) or mounting plate (4) according to Claim 8, **characterized in that** the actuating lever (9) is mounted on the mounting plate (4).

10. A castor (1) or mounting plate (4) according to any of the preceding claims, **characterized in that** the mounting plate (4) is formed without springs.

## Revendications

1. Plaque de montage (4) apte à être disposée sur une fourche (3) ou un palier de pivotement d'une roulette (1) et à être liée à la fourche ou à un élément du palier de pivotement (43), dans laquelle un élément de transmission (7) pour bloquer la roulette (1) est agencé sur le côté inférieur de la plaque de montage (4) en étant maintenu sur cette dernière, dans laquelle l'élément de transmission (7) est prévu pour être actionné par un élément coulissant (8) également maintenu sur la plaque de montage (4), qu'il est en outre prévu un élément de maintien (17) maintenant l'élément de transmission (7) et qui est également fixé à la plaque de montage (4), lequel élément de maintien (17) guide l'élément coulissant (8) agencé entre la plaque de montage (4) et l'élément de transmission (7), dans laquelle l'élément de transmission (7) est susceptible d'engager une ouverture de passage de la fourche ou du palier de pivotement à partir de la plaque de montage (4) à laquelle il est maintenu, **caractérisée en ce qu'**en outre l'élément de maintien (17) est réalisé en forme de dôme et que l'élément de transmission (7) est réalisé sous forme de poussoir avec un élargissement (41) en partie supérieure avec lequel il est capturé dans l'élément de maintien (17) qui est étroit en partie inférieure en référence à l'espace de réception.

2. Roulette (1) avec une fourche (3) et/ou un palier de pivotement (43), ainsi qu'une roue (2), et une plaque de montage (4) agencée au-dessus de la fourche (4) ou du palier de pivotement (43), dans lequel un élément de transmission (7) pour le blocage complet et/ou de la direction par action sur la roue (2) et/ou le palier de pivotement (43) est agencé sur le côté inférieur de la plaque de montage (4) en étant maintenu sur cette dernière, dans laquelle l'élément de transmission (7) est prévu pour être actionné par un élément coulissant (8) également maintenu sur la plaque de montage (4), qu'il est en outre prévu un élément de maintien (17) maintenant l'élément de transmission (7) et qui est également fixé à la plaque de montage (4) lequel élément de maintien (17) guide l'élément coulissant (8) agencé entre la plaque de montage (4) et l'élément de transmission (7), et que l'élément de transmission (7) est susceptible d'engager une ouverture de passage de la fourche ou du palier de pivotement à partir de la plaque de montage (4) à laquelle il est maintenu, **caractérisée en ce qu'**en outre l'élément de maintien (17) est réalisé en forme de dôme et que l'élément de transmission (7) est réalisé sous forme de poussoir avec un élargissement (41) en partie supérieure avec lequel il est capturé dans l'élément de maintien (17) qui est étroit en partie inférieure en référence à l'espace de réception.

3. Plaque de montage ou roulette selon la revendication 1, respectivement 2, **caractérisée en ce que** la plaque de montage (4) avec l'élément de transmission (7) et l'élément coulissant (8) est une unité préassemblée apte à être disposée sur la fourche (3).

4. Roulette (1) ou plaque de montage (4) selon l'une des revendications précédentes, **caractérisée en ce que** l'élément coulissant est agencé entre la plaque de montage (4) et l'élément de transmission (7).

5. Roulette (1) ou plaque de montage (4) selon l'une des revendications précédentes, **caractérisée en ce que** la roulette (1) présente un palier de pivotement (43) ayant une assiette support supérieure (16) et que la plaque de montage (4) est apte à être disposée sur l'assiette support (16) et à être fixée sur cette dernière.

6. Roulette (1) ou plaque de montage (4) selon l'une des revendications précédentes, **caractérisée en ce que** l'élément de transmission (7) est prévu pour être actionné aux fins de blocage de direction et/ou de blocage complet de la roulette (1) .

7. Roulette (1) ou plaque de montage (4) selon l'une des revendications 5 ou 6, **caractérisée en ce que** l'élément de transmission (7) peut être associé à une ouverture centrale (42) du palier de pivotement (43).

8. Roulette (1) ou plaque de montage (4) selon l'une des revendications précédentes, **caractérisée en ce qu'**est prévu un levier d'actionnement (9) pour actionner l'élément coulissant (8).

9. Roulette (1) ou plaque de montage (4) selon la revendication 8, **caractérisée en ce que** le levier d'actionnement (9) est monté sur la plaque de montage (4).

10. Roulette (1) ou plaque de montage (4) selon l'une des revendications précédentes, **caractérisée en ce que** la plaque de montage (4) est réalisée dépourvue de ressorts.
